# EUROPEAN PATENT APPLICATION

(11) **EP 4 611 010 A1**
(43) Date of publication of application: **03.09.2025**
(21) Application number: 25159058.4
(22) Date of filing: 20.02.2025
(51) Int. Cl.: H01F 38/18, H02K 11/00

(54) **POWER SUPPLY DEVICE INCLUDING POWER SUPPLY UNIT FOR CONTACTLESS POWER SUPPLY TO ROTOR**

(30) Priority: 01.03.2024 JP 2024030890
(71) Applicant: Aisin Corporation, Aichi 448-8650 (JP)
(72) Inventor: CHINEN, Shintaro, Kariya, Aichi, 448-8650 (JP); SAHA, Subrata, Kariya, Aichi, 448-8650 (JP); BIANCHI, Nicola, 35131 Padova, Veneto (IT); CINTI, Luca, 35131 Padova, Veneto (IT)
(74) Representative: TBK

(57) **Abstract**

A power supply device (90) includes a power supply unit (Tr) configured to supply power to a rotor (310) in a contactless manner. The power supply unit includes a power transmission unit (71) configured to transmit power to the rotor, and a power receiving unit (72) provided on a side close to the rotor and configured to receive power from the power transmission unit in a contactless manner. The power receiving unit includes a power receiving core (722) having an annular recess that accommodates a coil and an opening portion of the annular recess on a side close to the power transmission unit, and an outer peripheral member (723) provided to cover an outer periphery of the power receiving core.

## Description

### TECHNICAL FIELD

The present disclosure relates to a power supply device including a power supply unit for contactless power supply to a rotor.

### BACKGROUND DISCUSSION

In recent years, a wireless power supply technique (also referred to as a contactless power supply technique) has been used in various industries (for example, robots, energy, automobiles), and can also be used for power supply to a rotor of a motor in which a winding is disposed instead of using a permanent magnet in the rotor (Roman Manko et al., "Analysis and Design of Rotary Transformer for Wireless Power Transmission", "IEEE Problems of Automated Electrodrive. Theory and Practice (PAEP)", (Date'21-25 September), 2020.).

For example, in a case of a drive motor of an automobile or the like in which a winding is disposed in a rotor, power of about several kW is supplied to the rotor.

When the power is supplied to the rotor by the contactless power supply technique, a core of a transformer for the contactless power supply is large enough to supply power of about several kW.

On the other hand, in the case of the drive motor of the automobile or the like, a high rotation speed (rotation speed of about 20000 rpm) is required, and a large load due to a centrifugal force is applied to the core used for the contactless power supply to the rotor, but there is a problem that a core made of a material capable of obtaining good electrical characteristics is insufficient in strength.

Therefore, it is desired to provide a contactless power supply technique that can be suitably used for a motor or the like (for example, a drive motor of an automobile or the like) in which a large amount of power is supplied to the rotor and a high rotation speed is required.

A need thus exists for a contactless power supply technique that can be suitably used for a motor or the like in which a large amount of power is supplied to a rotor and a high rotation speed is required.

### SUMMARY

A power supply device according to this disclosure includes:
a power supply unit configured to supply power to a rotor in a contactless manner, in which
the power supply unit includes
a power transmission unit configured to transmit power to the rotor, and
a power receiving unit provided on a side close to the rotor and configured to receive power from the power transmission unit in a contactless manner, and
the power receiving unit includes
a power receiving core having an annular recess that accommodates a coil and an opening portion of the annular recess on a side close to the power transmission unit, and
an outer peripheral member provided to cover an outer periphery of the power receiving core.

According to this disclosure, it is possible to provide a contactless power supply technique that can be suitably used for a motor or the like in which a large amount of power is supplied to a rotor and a high rotation speed is required.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a configuration diagram showing a vehicle drive system in which contactless power supply by a power supply device according to a first embodiment disclosed here is applied to power supply to a rotor of a rotary electric machine;
FIG. 2 is a schematic cross-sectional view showing a part of a cross section of the rotary electric machine according to the first embodiment disclosed here;
FIG. 3 is a schematic cross-sectional view showing a configuration around the rotary electric machine including a power supply unit according to the first embodiment disclosed here;
FIG. 4 is a schematic partial cross-sectional perspective view of the power supply unit according to the first embodiment disclosed here;
FIG. 5A and FIG. 5B are diagrams showing an effect based on analysis results when an outer peripheral member according to the first embodiment disclosed here is provided;
FIG. 6 is a diagram showing a range in which an outer peripheral member is provided according to a second embodiment disclosed here; and
FIG. 7 is a graph showing a change in stress at an inner corner portion of a recess when a compressive stress and a range in which the outer peripheral member according to the second embodiment disclosed here is not provided are changed.

### DETAILED DESCRIPTION

Hereinafter, modes for carrying out this disclosure (hereinafter referred to as "embodiments") will be described in detail with reference to the accompanying drawings.

In addition, the same elements are given the same numbers or symbols throughout the description of the embodiments.

In addition, dimensional ratios in the drawings are different from actual dimensional ratios and are merely drawn to facilitate understanding of the description, and it is not guaranteed that the same portions are drawn with the same dimensions among the drawings.

Further, in the drawings, for the sake of clarity, a plurality of parts having the same attribute may be only partially denoted by reference numerals.

### First Embodiment

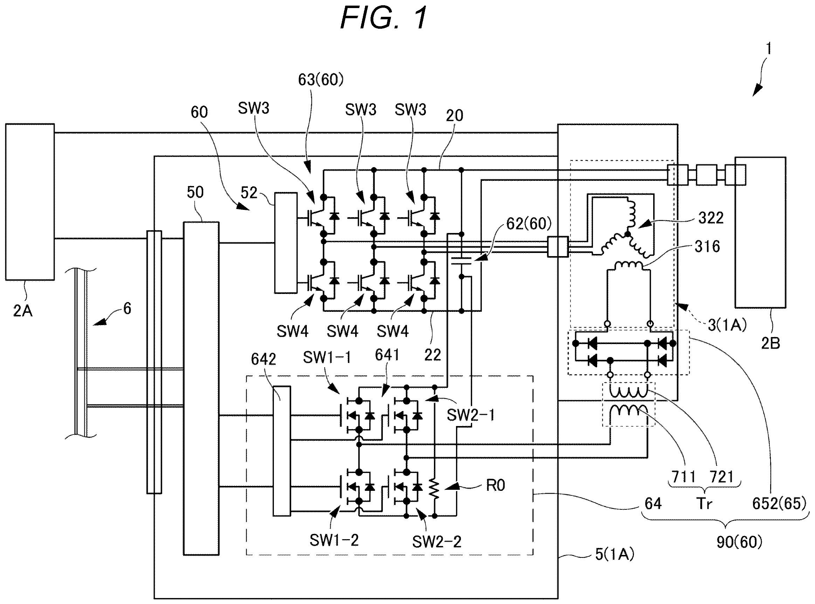

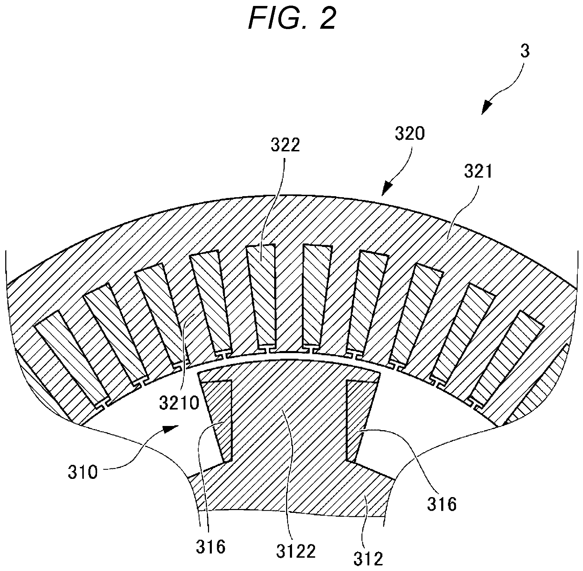

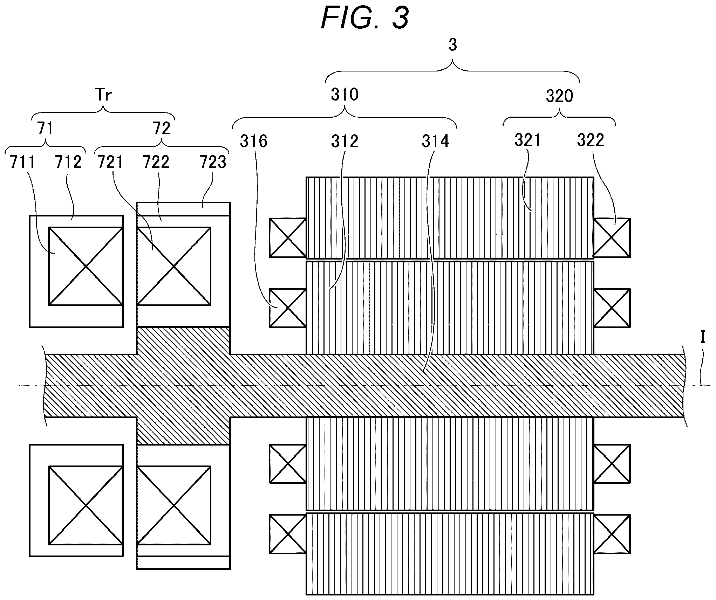

FIG. 1 is a configuration diagram showing, as an application example, a vehicle drive system 1 in which contactless power supply by a power supply device 90 according to a first embodiment disclosed here is applied to power supply to a rotor 310 (see FIGS. 2 and 3) of a rotary electric machine 3.

FIG. 2 is a schematic cross-sectional view showing a part of a cross section of the rotary electric machine 3 according to the first embodiment disclosed here.

FIG. 3 is a schematic cross-sectional view showing a configuration around the rotary electric machine 3 including a power supply unit Tr according to the first embodiment disclosed here.

As shown in FIG. 1, the vehicle drive system 1 has a two-power-supply configuration including a low-voltage battery 2A and a high-voltage battery 2B, and includes a vehicle drive device 1A.

The vehicle drive device 1A includes the rotary electric machine 3 (motor) and a drive device 5.

The low-voltage battery 2A is, for example, a lead battery, and has a rated voltage of, for example, 12 V.

The high-voltage battery 2B is, for example, a lithium-ion battery, and has a rated voltage significantly higher than that of the low-voltage battery 2A, for example, a rated voltage of 40 V or more.

In the present embodiment, as an example, the rated voltage of the high-voltage battery 2B is 300 V or more.

The high-voltage battery 2B may be in a form of a fuel cell or the like.

As shown in FIGS. 2 and 3, the rotary electric machine 3 includes the rotor 310 and a stator 320 provided radially outside the rotor 310.

The rotor 310 is of a winding field type, and as shown in FIG. 3, includes a rotor shaft 314, a rotor core 312 provided on the rotor shaft 314, and a rotor coil 316 provided on the rotor core 312.

The rotor coil 316 is formed by winding a coil wire for a field coil around the rotor core 312.

Specifically, as shown in FIG. 2, the rotor core 312 includes a tooth portion 3122 protruding radially outward, and the coil wire for a field coil forming the rotor coil 316 is wound around the tooth portion 3122.

The stator 320 includes a stator core 321 having tooth portions 3210 and stator coils 322 each having a coil wire wound around the tooth portion 3210.

As shown in FIG. 1, the drive device 5 includes a microcomputer 50 (hereinafter referred to as "microcomputer 50") and an electric circuit unit 60.

The microcomputer 50 may be implemented as, for example, an electronic control unit (ECU).

The microcomputer 50 is connected to various electronic components (other ECUs and sensors) in the vehicle via a network 6 such as a controller area network (CAN).

The microcomputer 50 receives various commands such as a control command from a higher-level ECU (not shown) via the network 6.

The microcomputer 50 controls the rotary electric machine 3 via the electric circuit unit 60 based on the control command.

The microcomputer 50 operates based on power from the low-voltage battery 2A.

The electric circuit unit 60 includes a smoothing capacitor 62, a power conversion circuit unit 63, a power supply circuit unit 64, and a power receiving circuit unit 65.

The power supply circuit unit 64 and the power receiving circuit unit 65, together with the power supply unit Tr which is a transformer, form the power supply device 90 that supplies power to the rotor coil 316 in a contactless manner.

Accordingly, unlike a configuration in which the power is supplied in a contact manner, reliability (durability or the like) can be improved since there is no wear.

The power supply unit Tr includes a power transmitting coil 711 (primary coil) and a power receiving coil 721 (secondary coil).

The smoothing capacitor 62 is provided between a high-potential-side line 20 and a low-potential-side line 22 of the high-voltage battery 2B.

A resistor R0 for passive discharge may be connected to both ends of the smoothing capacitor 62.

The power conversion circuit unit 63 is in an inverter form, and forms, for example, a three-phase bridge circuit.

The power conversion circuit unit 63 supplies three-phase AC power to the stator 320 (see FIG. 2) of the rotary electric machine 3 under the control of the microcomputer 50.

The power conversion circuit unit 63 is connected between the high-potential-side line 20 and the low-potential-side line 22 in parallel with the smoothing capacitor 62.

The power conversion circuit unit 63 includes switching elements SW3 of high-potential-side arms, switching elements SW4 of low-potential-side arms, and a drive circuit unit 52 (for example, a gate driver IC) that drives the switching elements SW3 and the switching elements SW4 based on a control signal from the microcomputer 50.

The power supply circuit unit 64 includes a bridge circuit unit 641 and a drive circuit unit 642.

The bridge circuit unit 641 is connected between the high-potential-side line 20 and the low-potential-side line 22 in parallel to the smoothing capacitor 62 and the resistor R0 for passive discharge.

The bridge circuit unit 641 is in a full-bridge circuit form, and includes switching elements SW1-1 and SW1-2 and switching elements SW2-1 and SW2-2.

The switching elements SW1-1 and SW1-2 are connected in series between the high-potential-side line 20 and the low-potential-side line 22.

One end of the power transmitting coil 711 is connected between the switching elements SW1-1 and SW1-2.

The switching elements SW2-1 and SW2-2 are connected in series between the high-potential-side line 20 and the low-potential-side line 22 in parallel with the switching elements SW1-1 and SW1-2.

The other end of the power transmitting coil 711 is connected between the switching elements SW2-1 and SW2-2.

ON-OFF states of the switching elements SW1-1, SW1-2, SW2-1, and SW2-2 are switched via the drive circuit unit 642.

The switching elements SW1-1, SW1-2, SW2-1, and SW2-2 change an energization state of the power transmitting coil 711 under the control of the drive circuit unit 642.

The switching elements SW1-1, SW1-2, SW2-1, and SW2-2 are, for example, insulated gate bipolar transistors (IGBTs), but may be other forms such as metal oxide semiconductor field-effect transistors (MOSFETs).

The drive circuit unit 642 supplies power to the rotor coil 316 via the power receiving circuit unit 65 by driving the switching elements SW1-1, SW1-2, SW2-1, and SW2-2 based on the control signal from the microcomputer 50.

The power receiving circuit unit 65 includes a rectifier circuit 652.

The rectifier circuit 652 is electrically connected between the power supply unit Tr (more specifically, a power receiving unit 72) and the rotor coil 316.

The rectifier circuit 652 rectifies a secondary-side current (drive current) of the power supply unit Tr and supplies the rectified current to the rotor coil 316.

As shown in FIG. 1, the rectifier circuit 652 may be a diode bridge circuit.

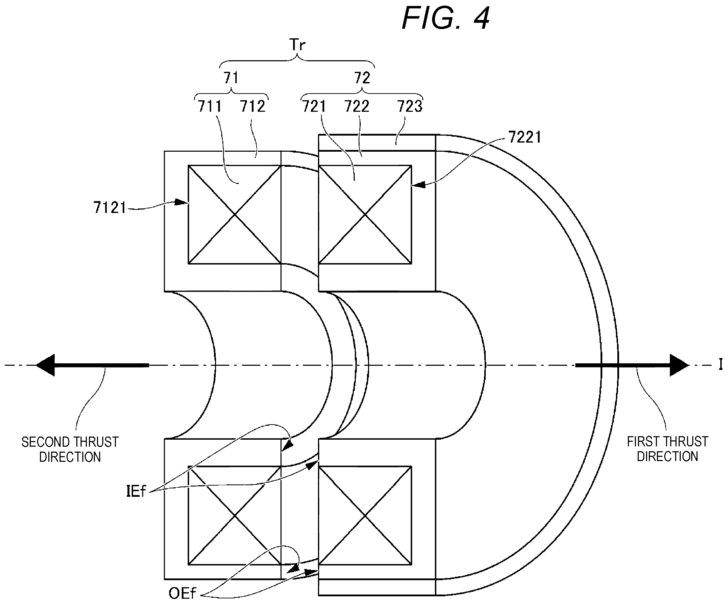

FIG. 4 is a schematic partial cross-sectional perspective view of the power supply unit Tr according to the first embodiment disclosed here.

In the following description, a direction in which a center axis I of the rotor 310 extends is referred to as a thrust direction (see FIGS. 3 and 4).

In addition, as shown in FIG. 4, as an expression further including a direction with respect to the thrust direction, the thrust direction in a direction approaching the rotor 310 (right side in FIG. 4) is referred to as a first thrust direction, and the thrust direction in a direction away from the rotor 310 (left side in FIG. 4) is referred to as a second thrust direction.

As shown in FIGS. 3 and 4, the power supply unit Tr includes a power transmission unit 71 and the power receiving unit 72 provided side by side in the thrust direction.

Specifically, as shown in FIGS. 3 and 4, the power supply unit Tr includes the power transmission unit 71 that transmits power to a rotor 310 side, and the power receiving unit 72 that is provided on the rotor 310 side so as to be separated from the power transmission unit 71 in the first thrust direction (direction approaching the rotor) and receives power from the power transmission unit 71 in a contactless manner.

The power transmission unit 71 includes the power transmitting coil 711 and a power transmitting core 712 in which an opening of a recess 7121 that accommodates the power transmitting coil 711 faces a power receiving unit 72 side.

As shown in FIG. 3, the power receiving unit 72 includes the power receiving coil 721, and a power receiving core 722 provided on the rotor shaft 314 such that an opening of a recess 7221 that accommodates the power receiving coil 721 faces a power transmission unit 71 side.

In the present embodiment, an outer diameter of a part of the rotor shaft 314 is increased, and the power receiving core 722 is fixed (press-fit fixed, adhesion fixed, or the like) to the rotor shaft 314, but this disclosure is not limited thereto.

For example, a spacer or the like interposed between the rotor shaft 314 and the power receiving core 722 may be provided without changing the outer diameter of the rotor shaft 314.

In the present embodiment, the power transmitting core 712 and the power receiving core 722 are ferrite cores made of ferrite, but may be, for example, dust cores made of Sendust.

When the power transmitting core 712 and the power receiving core 722 are made of ferrite, good electrical characteristics can be obtained.

As shown in FIG. 4, the power transmitting core 712 is a cylindrical member in which the recess 7121 having a rectangular cross section is formed, and the power transmitting core 712 includes the annular recess (recess 7121) that accommodates the power transmitting coil 711.

The power transmitting core 712 is provided to be separated from the power receiving core 722 in the thrust direction (more specifically, the second thrust direction away from the rotor 310).

Similarly, as shown in FIG. 4, the power receiving core 722 is a cylindrical member in which the recess 7221 having a rectangular cross section is formed, and the power receiving core 722 includes the annular recess (recess 7221) that accommodates the power receiving coil 721.

The recess 7121 of the power transmitting core 712 and the recess 7221 of the power receiving core 722 are both open in the thrust direction.

More specifically, the recess 7121 of the power transmitting core 712 is open in the first thrust direction approaching the rotor 310, and the recess 7221 of the power receiving core 722 is open in the second thrust direction away from the rotor 310.

That is, the power transmitting core 712 includes the opening (also referred to as an opening portion) of the annular recess (recess 7121) on the power receiving unit 72 side, and the power receiving core 722 includes the opening (also referred to as the opening portion) of the annular recess (recess 7221) on the power transmission unit 71 side.

As described above, the power transmitting core 712 includes the annular recess (recess 7121) that accommodates the power transmitting coil 711, and includes the opening (also referred to as the opening portion) of the annular recess on the power receiving unit 72 side.

Similarly, the power receiving core 722 includes the annular recess (recess 7221) that accommodates the power receiving coil 721, and includes the opening (also referred to as the opening portion) of the annular recess (recess 7221) on the power transmission unit 71 side.

As a result, the opening (opening portion) of the annular recess (recess 7121) of the power transmitting core 712 faces the opening (opening portion) of the annular recess (recess 7221) of the power receiving core 722.

Further, as shown in FIG. 4, for end faces on an opening side of both the power transmitting core 712 and the power receiving core 722, a width of an inner end face IEf is wider than a width of an outer end face OEf, so that a magnetic flux density of magnetic flux passing through an outer side and a magnetic flux density of magnetic flux passing through an inner side are substantially the same.

The power receiving unit 72 further includes an outer peripheral member 723 provided so as to cover an outer periphery of the power receiving core 722, and has a configuration for increasing strength so as to resist a load applied to the power receiving core 722 due to a centrifugal force.

More specifically, the power receiving core 722 also rotates by the rotation of the rotor 310, and at this time, the load applied to the power receiving core 722 acts as a force for increasing a diameter of the power receiving core 722.

Therefore, by providing the outer peripheral member 723 on the outer periphery of the power receiving core 722 against the force for increasing the diameter, the load applied to the power receiving core 722 can be efficiently reduced.

Therefore, it is not necessary to develop a material that increases the strength while maintaining the good electrical characteristics, and a material in the related art that can already provide the good electrical characteristics can be used as it is for the power receiving core 722.

For example, when power supply of about several kW is considered, an outer diameter of the power receiving core 722 is close to 100 mmφ, and a large load due to the centrifugal force is applied to the power receiving core 722.

In order to develop a new material having strength capable of withstanding such a large load and capable of maintaining the electrical characteristics, a large amount of labor is required.

However, according to the present embodiment, the outer peripheral member 723 reduces the load applied to the power receiving core 722, and the outer peripheral member 723 provided separately from the power receiving core 722 has a high degree of freedom in material selection.

Although merely providing the outer peripheral member 723 can reduce the load on the power receiving core 722 to some extent, the load applied to the power receiving core 722 can be suitably reduced by selecting, for example, a material having a large Young's modulus as the material used for the outer peripheral member 723.

Next, effects and the like when the outer peripheral member 723 is provided will be described with reference to analysis results.

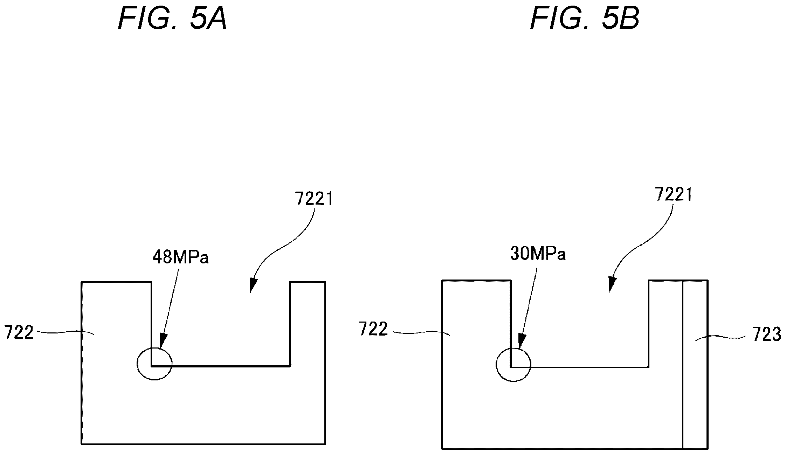

FIG. 5A and FIG. 5B are diagrams showing an effect based on analysis results when the outer peripheral member 723 according to the first embodiment disclosed here is provided.

FIG. 5A shows a comparative example in which the outer peripheral member 723 is not provided, and FIG. 5B shows a case in which the outer peripheral member 723 is provided.

In FIG. 5A and FIG. 5B, an upper-lower direction is the thrust direction described above, and the power receiving core 722 is formed with the recess 7221 having a bottom portion at about a half position when viewed in a thickness direction (thrust direction) orthogonal to a radial direction.

That is, a depth of the recess 7221 is substantially half a thickness of the power receiving core 722.

Since the stress tends to concentrate on a corner portion, FIG. 5A and FIG. 5B show the stress at an inner corner portion of the recess 7221 on a radially inner side (hereinafter, the radially inner side may be omitted) when the power receiving core 722 rotates at about 20000 rpm.

FIG. 5B shows a case in which the material of the outer peripheral member 723 is carbon fiber reinforced plastic (CFRP) and the outer peripheral member 723 applies a compressive stress of about 4 MPa to the power receiving core 722.

As can be seen from FIG. 5A and FIG. 5B, when the outer peripheral member 723 is not provided, a stress of 48 MPa (see FIG. 5A) is applied to the inner corner portion of the recess 7221, but the stress is reduced to 30 MPa (see FIG. 5B) by providing the outer peripheral member 723.

Since the centrifugal force is also increased by an increase in weight, it is preferable to use a tough and lightweight material for the outer peripheral member 723, and it is preferable to use fiber reinforced plastic (FRP) from this viewpoint.

Further, since the power receiving core 722 generates heat as a current flows through the power receiving coil 721, it is considered that the carbon fiber reinforced plastic (CFRP), which is FRP using a carbon material with less thermal deformation (contraction, expansion, and the like), is optimal as the material for the outer peripheral member 723.

### Second Embodiment

Next, a second embodiment disclosed here will be described.

Also in the second embodiment, the basic configuration is the same as that of the first embodiment. Hereinafter, the description of the same points as those of the first embodiment will be omitted, and different points will be mainly described.

The second embodiment is different from the first embodiment in that the outer peripheral member 723 changes the compressive stress applied to the power receiving core 722, and that a range in which the outer peripheral member 723 is provided on the power receiving core 722 is changed when viewed in the thickness direction (thrust direction) orthogonal to the radial direction.

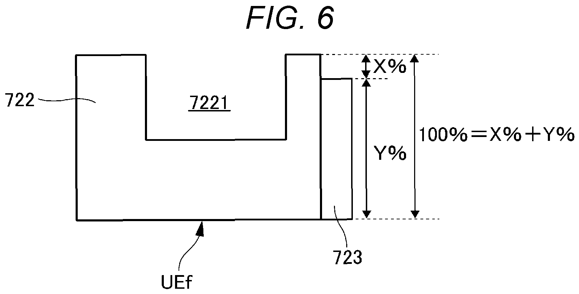

FIG. 6 is a diagram showing a range in which the outer peripheral member 723 is provided according to the second embodiment disclosed here.

In FIG. 6, an upper-lower direction is the thrust direction described above, but in the present embodiment, as shown in FIG. 6, the outer peripheral member 723 is not provided in a predetermined range (range of X%) on the opening side, which is a portion overlapping the recess 7221 (outer peripheral portion overlapping the recess 7221 in the thrust direction) when viewed in the thrust direction.

That is, the outer peripheral member 723 is not provided in the predetermined range (range of X%) on the opening (also referred to as an opening portion) side on a recess 7221 (also referred to as an annular recess) side.

In other words, the outer peripheral member 723 is not provided in the predetermined range (range of X%) of the outer peripheral portion on the opening side from the bottom portion (inner bottom portion) of the recess 7221.

As can be seen from FIG. 6, the case in which the outer peripheral member 723 is provided on the entire outer periphery of the power receiving core 722 in the thrust direction is 100%.

Therefore, a fact that the outer peripheral member 723 is not provided in the range of X% on the opening side means that the outer peripheral member 723 is provided in a range of Y% (= 100% - X%) in a direction (second thrust direction away from the rotor 310) from an end face UEf of the power receiving core 722 positioned opposite to the opening side toward the opening side.

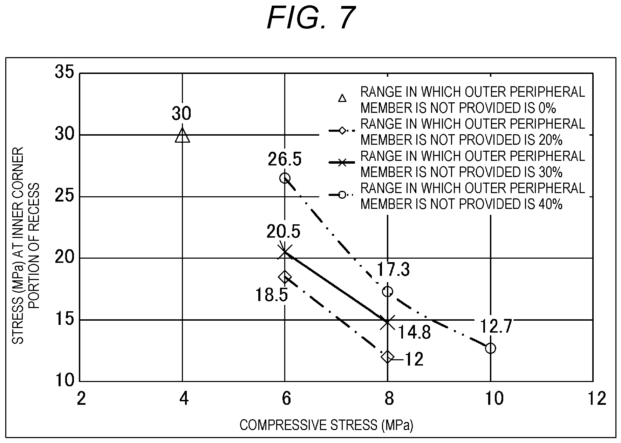

FIG. 7 is a graph showing changes in stress at the inner corner portion of the recess 7221 when a range in which the outer peripheral member 723 is not provided according to the second embodiment disclosed here and the compressive stress are changed.

The graph in FIG. 7 shows cases that a range in which the outer peripheral member 723 is not provided is 0% (X=0%, which is the same as that shown in the first embodiment), a range in which the outer peripheral member 723 is not provided is 20% (X = 20%), a range in which the outer peripheral member 723 is not provided is 30% (X = 30%), and a range in which the outer peripheral member 723 is not provided is 40% (X = 40%).

In the graph of FIG. 7, a horizontal axis represents the compressive stress (MPa) applied to the power receiving core 722 by the outer peripheral member 723, and a vertical axis represents the stress (MPa) applied to the inner corner portion of the recess 7221 as in the first embodiment.

As described above, since the depth of the recess 7221 is substantially half the thickness of the power receiving core 722, when a range Z of only the portion where the outer peripheral member 723 overlaps the recess 7221 when viewed in the thrust direction is regarded as 100%, the ranges of the graph of X = 20%, 30%, and 40% are Z = 40%, 60%, and 80%, respectively.

First, when the compressive stress is 6 MPa, it can be seen that as the range in which the outer peripheral member 723 is not provided is smaller, that is, as the outer peripheral member 723 is provided over the entire range of the outer periphery of the power receiving core 722, the stress at the inner corner portion of the recess 7221 is smaller.

This tendency is the same even when the compressive stress is 8 MPa, and it can be seen that, if the compressive stress applied to the power receiving core 722 by the outer peripheral member 723 is the same, an effect of reducing the stress at the inner corner portion of the recess 7221 can be obtained as the outer peripheral member 723 is provided over the entire range of the outer periphery of the power receiving core 722.

On the other hand, when the range of the outer peripheral member 723 provided on the outer periphery of the power receiving core 722 is the same, it can be seen that the effect of reducing the stress at the inner corner portion of the recess 7221 is obtained as the compressive stress applied to the power receiving core 722 by the outer peripheral member 723 increases.

Therefore, when viewed only from the viewpoint of reducing the stress at the inner corner portion of the recess 7221, it is preferable that outer peripheral member 723 is provided over the entire range of the outer periphery of the power receiving core 722 and the outer peripheral member 723 applies a large compressive stress to the power receiving core 722.

For example, in order for the outer peripheral member 723 to apply a large compressive stress to the power receiving core 722, the outer peripheral member 723 made of the CFRP may be formed by winding carbon fiber or the like around the power receiving core 722 while applying tension corresponding to the compressive stress and impregnating the carbon fiber or the like with resin in this state to fix the outer peripheral member 723.

As another method of applying a large compressive stress to the power receiving core 722 by the outer peripheral member 723, for example, the outer peripheral member 723 having an inner diameter smaller than that of the power receiving core 722 may be first produced, and the power receiving core 722 may be cooled to be fitted into the outer peripheral member 723 in a contracted state.

The inner diameter of the outer peripheral member 723 is set such that a desired compressive stress is applied when the power receiving core 722 returns to a normal temperature and returns to the original size.

In particular, carbon is less likely to deform (shrink, expand, or the like) depending on the temperature, and thus the CFRP is also a material that is less likely to deform with respect to temperature changes.

Therefore, when the outer peripheral member 723 is made of the CFRP, it is recommended to cool the power receiving core 722, and contract the power receiving core 722 to fit the outer peripheral member 723.

However, as briefly described in the first embodiment, there is also a problem that the power receiving core 722 generates heat as a current flows through the power receiving coil 721.

As described above, the fiber reinforced plastic (FRP) is lightweight and tough, and thus is suitable as a material for the outer peripheral member 723, but has an aspect of poor heat dissipation.

Therefore, in further consideration of the heat generation, it is preferable to ensure heat dissipation by assuming that the outer peripheral member 723 is not provided in the predetermined range (range of X%) on the opening side, which is a portion overlapping the recess 7221 when viewed in the thrust direction, on the premise that the stress at the inner corner portion of the recess 7221 can be sufficiently reduced.

For example, in the case of the ferrite core in which the material of the power receiving core 722 is ferrite, there is a concern that the power receiving core 722 may be damaged when a mechanical stress exceeding 44 MPa is applied.

Therefore, considering a safety factor of about 1.5 to 2.0, if the stress applied to the ferrite core can be reduced to less than 22 MPa, there is almost no risk of breakage at first.

Therefore, for example, when the compressive stress applied to the power receiving core 722 by the outer peripheral member 723 is 6 MPa, the outer peripheral member 723 may not be provided in the range of 30% on the opening side to ensure the heat dissipation.

As described above, in relation to the compressive stress applied to the power receiving core 722 by the outer peripheral member 723, it is preferable that the outer peripheral member 723 is not provided in the predetermined range on the opening side, which is a portion overlapping the recess 7221 when viewed in the thrust direction, in a range in which the stress applied to the power receiving core 722 is less than 22 MPa, and the heat dissipation is improved.

Note that, if the outer peripheral member 723 is not provided up to a position where there is no portion overlapping the recess 7221 when viewed in the thrust direction, that is, up to a position where X exceeds 50% in the present embodiment, the effect of reducing the stress at the inner corner portion of the recess 7221 is significantly reduced, and thus the outer peripheral member 723 is preferably provided at least partially overlapping the recess 7221 when viewed in the thrust direction.

Further, although not as severe as the inner corner portion of the recess 7221, the stress due to the centrifugal force tends to be applied also to the radially inner side of the end face UEf side of the power receiving core 722 positioned opposite to the opening side.

Therefore, as shown in FIG. 6, it is desirable that the outer peripheral member 723 is provided up to a position on the end face UEf side of the power receiving core 722 positioned opposite to the opening side, so that the stress applied to the radially inner side on the end face UEf side of the power receiving core 722 can be reduced.

As a specific example of the power supply unit Tr, the case of an axial type in which the power transmitting core 712 and the power receiving core 722 are provided in the thrust direction is described.

On the other hand, as another type, there is a radial type in which the power transmitting core 712 is provided radially outside the power receiving core 722.

However, since the power receiving core 722 to be rotated is larger in the axial type, an effect of providing the outer peripheral member 723 is larger.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A power supply device (90) comprising:
a power supply unit (Tr) configured to supply power to a rotor (310) in a contactless manner, wherein
the power supply unit includes
a power transmission unit (71) configured to transmit power to the rotor, and
a power receiving unit (72) provided on a side close to the rotor and configured to receive power from the power transmission unit in a contactless manner, and
the power receiving unit includes
a power receiving core (722) having an annular recess that accommodates a coil and an opening portion of the annular recess on a side close to the power transmission unit, and
an outer peripheral member (723) provided to cover an outer periphery of the power receiving core.

2. The power supply device according to claim 1, wherein
the power transmission unit and the power receiving unit are disposed side by side in a thrust direction.

3. The power supply device according to claim 2, wherein
the outer peripheral member is not provided in a predetermined range on a side of the opening portion.

4. The power supply device according to any one of claims 1 to 3, wherein
the outer peripheral member is made of fiber reinforced plastic.

5. The power supply device according to any one of claims 1 to 3, wherein
the power receiving core is made of ferrite.

6. The power supply device according to any one of claims 1 to 3, wherein
the outer peripheral member applies a predetermined compressive stress to the power receiving core.

7. The power supply device according to claim 2, wherein
the power transmission unit includes a power transmitting core (712) having an annular recess that accommodates a coil and an opening portion of the annular recess on a side close to the power receiving unit.
